(19) Europäisches Patentamt
European Patent Office
Office européen des brevets

(11) Veröffentlichungsnummer: **0 327 980 A2**

(12) **EUROPÄISCHE PATENTANMELDUNG**

(21) Anmeldenummer: **89101852.5**

(51) Int. Cl.⁴: **C08L 71/00 , C08L 81/06**

(22) Anmeldetag: **03.02.89**

(30) Priorität: **12.02.88 DE 3804393**

(43) Veröffentlichungstag der Anmeldung: **16.08.89 Patentblatt 89/33**

(84) Benannte Vertragsstaaten: **BE CH DE FR GB LI**

(71) Anmelder: **BASF Aktiengesellschaft**
**Carl-Bosch-Strasse 38**
**D-6700 Ludwigshafen(DE)**

(72) Erfinder: **Koch, Jürgen, Dr.**
**Woogstrasse 36**
**D-6708 Neuhofen(DE)**
Erfinder: **Lieder, Robert Ralf, Dr.**
**Albert-Einstein-Allee 10**
**D-6703 Limburgerhof(DE)**
Erfinder: **Heinz, Gerhard, Dr.**
**Im Vogelsang 2**
**D-6719 Weisenheim(DE)**

(54) **Hochtemperaturbeständige Polyarylether mit verbesserter Verarbeitbarkeit.**

(57) Hochtemperaturbeständige Polyarylether, aufgebaut im wesentlichen aus

A) 60 bis 97 mol% wiederkehrenden Einheiten der allgemeinen Formel I

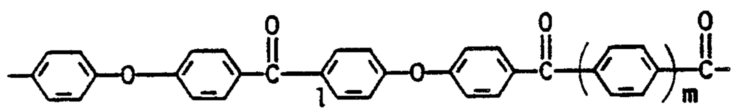

(I)

oder deren kernsubstituierten $C_1$-$C_6$-Alkyl-, $C_1$-$C_6$-Alkoxy-, Aryl-, Chlor- oder Fluorderivaten, wobei l und m den Wert 1 oder 2 haben,

B) 3 bis 40 mol% wiederkehrenden Einheiten der allgemeinen Formel II

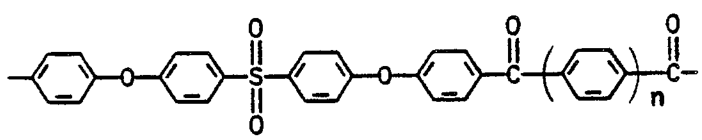

(II)

oder deren kernsubstituierten $C_1$-$C_6$-Alkyl-, $C_1$-$C_6$-Alkoxy-, Aryl-, Chlor- oder Fluorderivaten, wobei n den Wert 1 oder 2 hat,
sowie darüberhinaus

C) 0 bis 15 mol% wiederkehrenden Einheiten der allgemeinen Formeln III und/oder IV

EP 0 327 980 A2

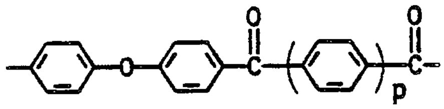

(III)

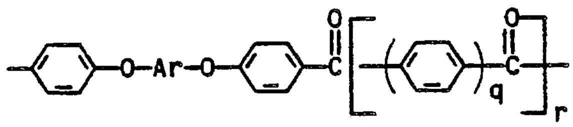

(IV)

oder deren kernsubstituierten $C_1$-$C_6$-Alkyl-, $C_1$-$C_6$-Alkoxy-, Aryl-, Chlor- oder Fluorderivaten, wobei Ar

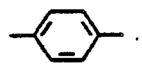

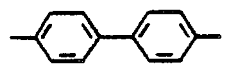

oder

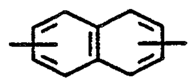

oder ein $C_1$-$C_6$-Alkyl-, $C_1$-$C_6$-Alkoxy-, Chlor- oder Fluorderivat derselben bedeutet, r den Wert 0 oder 1 und p und q und s den Wert 1 oder 2 haben.

## Hochtemperaturbeständige Polyarylether mit verbesserter Verarbeitbarkeit

Die vorliegende Erfindung betrifft hochtemperaturbeständige Polyarylether, aufgebaut im wesentlichen aus

A) 60 bis 97 mol% wiederkehrenden Einheiten der allgemeinen Formel I

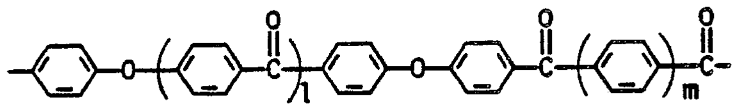 (I)

oder deren kernsubstituierten $C_1$-$C_6$-Alkyl-, $C_1$-$C_6$-Alkoxy-, Aryl-, Chlor- oder Fluorderivaten, wobei l und m den Wert 1 oder 2 haben,

B) 3 bis 40 mol% wiederkehrenden Einheiten der allgemeinen Formel II

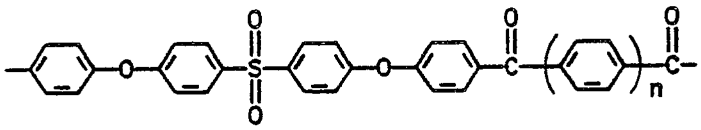 (II)

oder deren kernsubstituierten $C_1$-$C_6$-Alkyl-, $C_1$-$C_6$-Alkoxy-, Aryl-, Chlor- oder Fluorderivaten, wobei n den Wert 1 oder 2 hat,

sowie darüberhinaus

C) 0 bis 15 mol% wiederkehrenden Einheiten der allgemeinen Formeln III und/oder IV

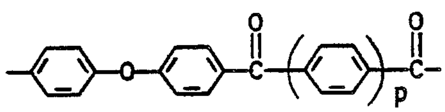 (III)

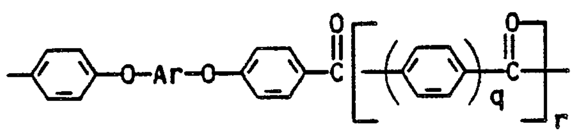 (IV)

oder deren kernsubstituierten $C_1$-$C_6$-Alkyl-, $C_1$-$C_6$-Alkoxy-, Aryl-, Chlor- oder Fluorderivaten, wobei Ar

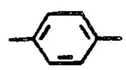

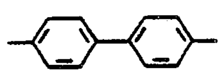 oder

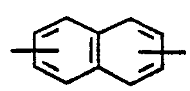

oder ein $C_1$-$C_6$-Alkyl-, $C_1$-$C_6$-Alkoxy-, Chlor- oder Fluorderivat derselben bedeutet, r den Wert 0 oder 1 und p und q und s den Wert 1 oder 2 haben.

Darüberhinaus betrifft die Erfindung die Verwendung derartiger Polyarylether zur Herstellung von

Fasern, Folien, Formkörpern und Hochleistungsverbundwerkstoffen sowie die aus den Polyarylethern hergestellten Formkörper.

Die Erfindung betrifft ebenfalls Mischungen aus den erfindungsgemäßen Polyarylethern mit Polyarylethersulfonen, deren Verwendung zur Herstellung von Formkörpern sowie aus den Mischungen hergestellte Formkörper.

Polyaryletherketone und Polyarylethersulfone sind hochtemperaturbeständige Polymere mit ausgezeichneten Eigenschaften, insbesondere einer hohen Temperaturbeständigkeit, hoher mechanischer Festigkeit und Zähigkeit sowie guter Chemikalienbeständigkeit.

Teilkristalline Polyarylether, wie z.B. Polyaryletherketone, zeichnen sich außerdem durch eine sehr gute Beständigkeit gegenüber Lösungsmitteln aus.

Teilkristalline Polyaryletherketone weisen auch oberhalb über Glasübergangstemperatur ($T_g$) eine gewisse mechanische Festigkeit auf, die erst bei der Kristallschmelztemperatur ($T_m$) verlorengeht, die bei bekannten Polyetherketonen oberhalb 320 °C liegt.

Beim Überschreiten der Glasübergangstemperatur nimmt die mechanische Festigkeit von Polyarylethern stets zu einem gewissen Prozentsatz ab; daher ist es wünschenswert, Polyarylether mit möglichst hoher Glasübergangstemperatur herzustellen. Da jedoch üblicherweise, z.B. bei bekannten Polyaryletherketonen mit steigender Glasübergangstemperatur auch der Kristallschmelzpunkt ansteigt, treten bei Polyarylethern mit hohen Glasübergangstemperaturen aufgrund ihres auch sehr hohen Kristallschmelzpunktes häufig Probleme bei der Verarbeitung auf.

Übliche Verarbeitungstemperaturen aus der Schmelze liegen mindestens 30 °C über dem Schmelzpunkt; viele Polyarylether beginnen jedoch sich bei Temperaturen über 400 °C mehr oder weniger schnell zu zersetzen oder zu vernetzen, so daß Polyarylether mit Schmelztemperaturen nahe 400 °C nur schwierig zu verarbeiten sind.

So ist z.B. der US-A 3 516 966 zu entnehmen, daß ein Polymeres aus Diphenylether und Terephthalsäuredichlorid praktisch nicht aus der Schmelze verarbeitet werden kann, da dies Extrusions-Temperaturen von 420 °C erfordert, das Polymer sich jedoch bereits bei Temperaturen über 400 °C zersetzt.

Hinzu kommt, daß übliche Vorrichtungen zur Verarbeitung von Polymeren über die Schmelze üblicherweise nicht für Temperaturen über 400 °C ausgelegt sind.

Es wurden daher bereits Versuche unternommen, die Kristallschmelztemperaturen von Polyarylethern zu erniedrigen.

So wird in der US-A 3 516 966 ein Copolymer aus Diphenylether, Terephthalsäuredichlorid und Isophthalsäuredichlorid beschrieben. Ganz allgemein läßt sich durch Einführung von meta-Verknüpfungen die Schmelztemperatur von teilkristallinen Polyarylethern absenken; gleichzeitig wird jedoch dabei auch die Glasübergangstemperatur und die Kristallinität abgesenkt, so daß z.B. Copolymere des obengenannten Typs mit mehr als 30 mol% Isophthalsäuredichlorid nur noch schwierig kristallisieren. Außerdem sind meta-Phenylengruppen üblicherweise weniger chemisch stabil als para-Phenylengruppen, so daß derartige Copolymere eine geringere Stabilität aufweisen als Polymere, die ausschließlich para-verknüpfte aromatische Einheiten aufweisen.

In der EP-A 184 458 wird beschrieben, daß man durch Mitverwendung einer bestimmten Menge von Monomeren mit Diphenyleinheiten eine gewisse Absenkung der Schmelztemperatur erreichen kann, ohne daß die Glasübergangstemperatur in gleichem Maße abfällt.

Die in der EP-A 184 458 beschriebenen Copolymeren mit zufriedenstellender Schmelztemperatur weisen jedoch Glasübergangstemperaturen von weniger als 160 °C auf. Copolymere mit höherer Glasübergangstemperatur wiederum weisen zu hohe Kristallschmelztemperaturen auf.

Hinzu kommt, daß die in der EP-A 184 458 beschriebenen Copolymere Phenyleneinheiten enthalten, welche von zwei Ethergruppen benachbart sind. Derartige Phenylengruppen weisen eine geringere chemische Stabilität auf, so werden sie z.B. leicht sulfoniert, da der elektronenschiebende Effekt der Ethergruppen nicht durch einen elektronenziehenden Effekt einer Keto-oder Sulfongruppe aufgehoben wird.

In der GB-A-1 563 224 werden in den Beispielen 6 und 7 Copolymere aus 25 - 50 mol% Einheiten der Formel I und 50 - 75 mol% Einheiten der Formel II beschrieben, die jedoch wegen ihres relativ hohen Gehalts an Sulfongruppen nicht in vollem Umfang zufriedenstellen können.

Insgesamt gesehen können daher die bislang in der Literatur beschriebenen Wege zur Herstellung von Polyarylethern mit hoher Glasübergangstemperatur bei gleichzeitig guter Verarbeitbarkeit nicht in vollem Umfang zufriedenstellen.

Aufgabe der vorliegenden Erfindung war es daher, Polyarylether mit hoher Glasübergangstemperatur bei guter Verarbeitbarkeit herzustellen, die darüberhinaus nur para-verknüpfte Phenyleneinheiten enthalten und bei denen jede Phenylengruppe von mindestens einer elektronenziehenden Gruppe benachbart ist.

Diese Aufgabe wird durch die hochtemperaturbeständigen Polyarylether gemäß Anspruch 1 gelöst.

Bevorzugte Polyarylether sind den Unteransprüchen zu entnehmen.

Als Komponente A) enthalten die erfindungsgemäßen hochtemperaturbeständigen Polyarylether 60 bis 97, vorzugsweise 70 bis 95 mol% wiederkehrende Einheiten der allgemeinen Formel (I)

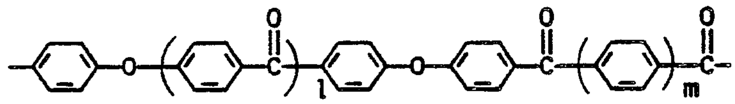

(I)

Die aromatischen Einheiten können $C_1$-$C_6$-Alkyl-, $C_1$-$C_6$-Alkoxy-, Aryl-, Chlor- oder Fluorsubstituenten enthalten. Nur beispielhaft seien hier Methyl, Ethyl, i- und n-Propyl, Methoxy, Ethoxy, Phenyl, Trifluormethyl und Chlor als Substituenten genannt.

Im allgemeinen werden jedoch unsubstituierte Einheiten der allgemeinen Formel (I) bevorzugt.

Die Parameter l und m haben unabhängig voneinander den Wert 1 oder 2. Es können auch Copolymere eingesetzt werden, bei denen im Polymermolekül sowohl Gruppierungen mit l = 1 als auch solche mit l = 2 enthalten sind.

Als Komponente B) enthalten die erfindungsgemäßen hochtemperaturbeständigen Polyarylether 3 bis 40, vorzugsweise 5 bis 30 mol% an wiederkehrenden Einheiten der allgemeinen Formel (II)

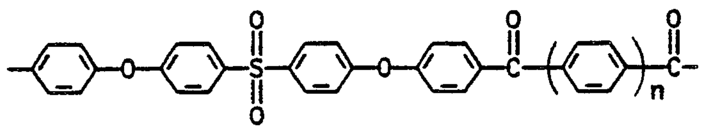

(II)

oder deren kernsubstituierten $C_1$-$C_6$-Alkyl-, $C_1$-$C_6$-Alkoxy-, Aryl-, Chlor- oder Fluorderivaten. Wie im Falle der wiederkehrenden Einheiten der allgemeinen Formel (I) werden aber im allgemeinen unsubstituierte Einheiten der allgemeinen Formel (II) bevorzugt. Hinsichtlich Beispielen für entsprechende Substituenten sei hier auf die Ausführungen zu den Einheiten der allgemeinen Formel (I) verwiesen.

Der Parameter n kann wie der Parameter m den Wert 1 oder 2 haben.

Neben den wesentlichen Komponenten A) und B) können die erfindungsgemäßen Polyarylether noch kleinere Anteile, d.h. 0 bis 15 mol%, vorzugsweise 0 bis 10 mol% an wiederkehrenden Einheiten der allgemeinen Formeln (III) oder (IV) oder deren Mischungen enthalten.

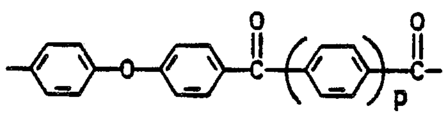

(III)

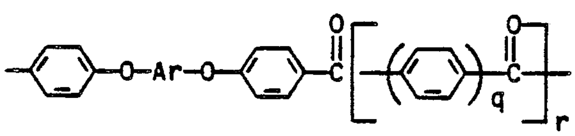

(IV)

Wie im Fall der wiederkehrenden Einheiten der allgemeinen Formeln (I) und (II) können auch in den wiederkehrenden Einheiten (III) und (IV) die aromatischen Ringe durch $C_1$-$C_6$-Alkyl-, $C_1$-$C_6$-Alkoxy-, Aryl-, Chlor- oder Fluorgruppen substituiert sein; bevorzugt werden jedoch die unsubstituierten Einheiten.

Der Parameter Ar in der allgemeinen Formel (IV) stellt einen Phenylen-, Diphenylen- oder Naphthylenrest dar, welche gegebenenfalls auch entsprechend substituiert sein können.

Die Parameter p und q können den Wert 1 oder 2, der Parameter r kann den Wert 0 oder 1 annehmen.

Nachstehend seien einige Beispiele für wiederkehrende Einheiten der allgemeinen Formel (IV) dargestellt:

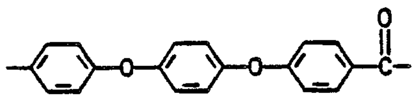

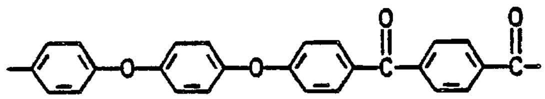

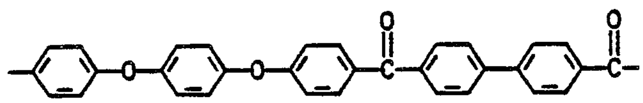

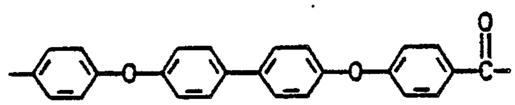

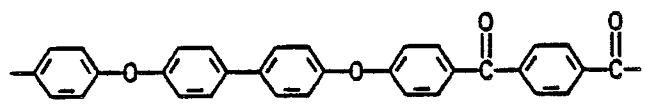

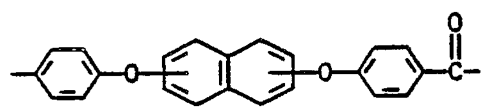

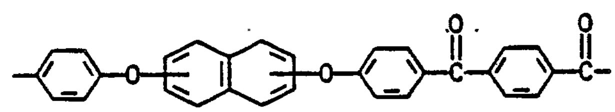

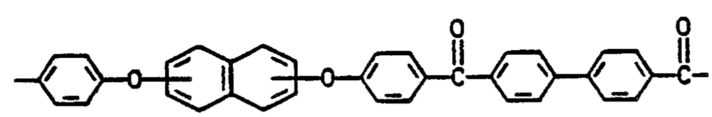

Die erfindungsgemäßen Polyarylether weisen Glasübergangstemperaturen von mehr als 170° C bei Kristallschmelztemperaturen von unter 375° C auf. Darüberhinaus zeigen sie bedingt durch die Tatsache, daß ausschließlich para-Phenylen-Einheiten vorhanden sind, welche durch mindestens eine elektronenziehende Gruppe desaktiviert werden, eine ausgezeichnete Stabilität auf.

Die relative Viskosität der erfindungsgemäßen Polyarylether liegt im allgemeinen im Bereich von 1,2 bis 2,5, vorzugsweise von 1,4 bis 2,0 (gemessen bei 25° C in konzentrierter Schwefelsäure bei einer Konzentration von 0,5 g Polymer in 100 ml Schwefelsäure).

Die erfindungsgemäßen Polyarylether können auch im Gewichtsverhältnis von 80:20 bis 20:80, insbesondere von 30:70 bis 70:30 mit an sich bekannten Polyarylethersulfonen gemischt werden, wie sie kommerziell im Handel erhältlich sind. Derartige Mischungen aus teilkristallinen Polyarylethern und amorphen Polyarylethersulfonen weisen ein interessantes Eigenschaftsspektrum auf.

Verfahren zur Herstellung der erfindungsgemäßen Polyarylether sind an sich bekannt und in der Literatur beschrieben.

Eine erste Möglichkeit ist die elektrophile Friedel-Crafts-Polykondensation durch Umsetzung von

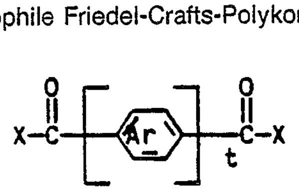

mit einer Mischung aus

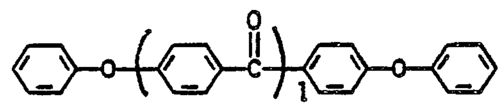

und

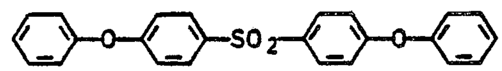

wobei X eine Gruppe ist, welche unter den Bedingungen einer Friedel-Crafts-Reaktion substituierbar ist und die Parameter l und t den Wert 1 oder 2 annehmen können.

Bevorzugte Beispiele für X sind Halogenatome oder Alkoxygruppen OR′ wobei R′ eine niedrige Alkylgruppe, insbesondere eine Methyl-, Ethyl-, Propyl- oder iso-Propylgruppe bedeutet.

Zur Herstellung von wiederkehrenden Einheiten mit Substituenten an den aromatischen Ringen können die entsprechenden substituierten Verbindungen eingesetzt werden.

Ein bevorzugtes Monomer der ersten vorstehend genannten Struktur ist Terephthalsäuredichlorid.

Die Summe der molaren Mengen des erstgenannten Monomeren und der Mischung aus den beiden letztgenannten Monomeren sollte im wesentlichen äquivalent sein, damit sich Polyarylether von ausreichend hohem Molekulargewicht bilden können. Ein leichtes stöchiometrisches Ungleichgewicht des Mengenverhältnisses kann zur Steuerung des Molekulargewichts verwendet werden.

Entsprechend den Anteilen der wiederkehrenden Einheiten der allgemeinen Formeln (I) und (II) liegt das Molverhältnis der beiden letztgenannten Monomeren im Bereich von 60:40 bis 97:3 und vorzugsweise von 70:30 bis 95:5. Anstelle der Monomeren mit l = 1 oder l = 2 können auch Gemische von Monomeren mit l = 1 und solchen mit l = 2 eingesetzt werden.

Falls in die erfindungsgemäßen Polyarylether neben den Einheiten der allgemeinen Formeln (I) und (II) auch noch Einheiten der Formeln (III) bis (V) in untergeordnetem Umfang eingebaut werden sollen, so kann dies durch Mitverwendung der entsprechenden Monomeren erfolgen. Es versteht sich, daß dann die stöchiometrischen Verhältnisse entsprechend zu korrigieren sind.

Beispiele entsprechender Comonomerer, die zur Herstellung von wiederkehrenden Einheiten der allgemeinen Formeln (III) und (IV) verwendet werden können, sind:

Diphenyl-4,4′-dicarbonsäuredichlorid,
Paraphenoxybenzoylchlorid,
1,4-Diphenoxybenzol,
Diphenylether,
1,4-Diphenoxynaphthalin,
2,6-Diphenoxynaphthalin,
2,7-Diphenoxynaphthalin und
4,4′-Diphenoxydiphenyl.

Als Katalysatoren zur Durchführung der Friedel-Crafts-Reaktion können die an sich bekannten verwendet werden. Beispielsweise seien hier nur Aluminiumtrichlorid, Aluminiumtribromid, Antimonpentachlorid, Antimonpentafluorid, Bortrichlorid, Bortrifluorid, Zinkdichlorid, Eisentrichlorid, Zinndichlorid und Titantetrachlorid genannt.

Ein bevorzugtes Verfahren für die Herstellung der erfindungsgemäßen Polyarylether ist die elektrophile Friedel-Crafts-Reaktion unter Verwendung von Fluorwasserstoff als Lösungsmittel und Bortrifluorid als Katalysator wie es z.B. in den US-A 3 953 400 und 4 247 682 sowie in US-A 3 956 240 beschrieben wird.

Eine Variante dieses Verfahrens ist darüberhinaus in der DE-A 34 16 445 und der DE-A 34 16 446 beschrieben.

Besonders bevorzugt ist ein Verfahren wie es in der WO 84/03891 beschrieben wird, wobei die Friedel-Crafts-Polykondensation mit Hilfe einer Lewis-Base gesteuert wird.

Bevorzugte Lewis-Basen sind Diphenylsulfon, Dimethylsulfon, N-Methylformamid, N,N-Dimethylformamid, N,N-Dimethylacetamid, N-Methylpyrrolidon, Tetramethylensulfon, N-Butyronitril, Dimethylsulfid, Imidazol, Aceton, Benzophenon, Trimethylamin, Tetramethylammoniumchlorid, Pyridin-N-oxid, Lithiumchlorid, Lithiumbromid, Natriumfluorid, Natriumbromid, Kaliumbromid oder deren Mischungen. Von diesen werden Lithiumchlorid, Natriumchlorid, Dimethylsulfon, Sulfolan und N,N-Dimethylformamid besonders bevorzugt.

Die Menge an Lewis-Base liegt vorzugsweise im Bereich von 0,1 bis 4, insbesondere 0,2 bis 2 Äquivalenten pro Äquivalent an substituierbarer Gruppe (d.h. im allgemeinen Säurechloridgruppe).

Die Menge an Katalysator, d.h. an Lewis-Säure, beträgt im allgemeinen mindestens 1 Äquivalent Lewis-Säure pro Äquivalent an Carbonyl-, Sulfonyl-oder anderen basischen Gruppen. Vorzugsweise wird jedoch ein Überschuß von 0,05 bis 0,5 Äquivalenten Lewis-Säure pro Äquivalent an basischen Gruppen eingesetzt.

Unter den vorstehend bereits genannten Lewis-Säuren wird als Katalysator Aluminiumtrichlorid bevorzugt.

Als Lösungsmittel für die Polykondensation eignen sich besonders aprotische Lösungsmittel wie Dichlormethan, 1,2-Dichlorethan, Kohlenstoffdisulfid, o-Dichlorbenzol, 1,2,4-Trichlorbenzol, o-Difluorbenzol und 1,1,2,2-Tetrachlorethan.

Diese können auch im Gemisch mit anderen unpolaren Lösungsmitteln wie z.B. Pentan, Hexan, Heptan, Cyclohexan, Petrolether, 1,1,2-Trichlortrifluorethan, Chlortrifluormethan oder dergleichen eingesetzt werden.

Durch Mitverwendung von Reagentien zum Endgruppenverschluß, wie dies z.B. in der US-A 4 247 682 beschrieben ist, kann das Molekulargewicht der erfindungsgemäßen Polyarylether, der Verzweigungsgrad und der Gelanteil gesteuert werden. Wie bereits erwähnt, ist eine Steuerung des Molekulargewichts auch durch Variation des Monomerverhältnisses möglich.

Reagentien zum Verschließen der Endgruppen werden im allgemeinen zugegeben, um an mindestens einem Ende der Polymerkette einen Substituenten einzuführen, welcher eine geringe Reaktivität aufweist. Dies führt zu Polymeren mit definiertem Molekulargewicht, verminderter Gelbildung und verbesserter Schmelzestabilität.

Entsprechende Reagentien sind üblicherweise monofunktionelle Monomere, die sowohl elektrophil als auch nukleophil sein können.

Bevorzugte elektrophile Reagentien zum Endgruppenverschluß sind Benzoylchlorid, Benzolsulfonylchlorid und Diphenylcarbonsäurechlorid, während als nukleophile Reagentien bevorzugt 4-Chlordiphenyl, 4-Phenoxybenzophenon, 4-Benzolsulfonyldiphenylether und Diphenyl selbst eingesetzt werden können.

Nach Beendigung der Polykondensationsreaktion wird der gebildete Katalysator-Polymer-Komplex im allgemeinen durch Behandlung mit einer Base in seine Bestandteile getrennt. Dabei kann die Base zum Reaktionsmedium gegeben werden oder umgekehrt; in jedem Fall sollte die Base im Überschuß eingesetzt werden, um eine vollständige Trennung bzw. Dekomplexierung zu erreichen.

Typische Basen, welche zu dieser Dekomplexierung eingesetzt werden können sind Wasser, wäßrige Salzsäure, Methanol, Ethanol, Aceton, N,N-Dimethylformamid, Tetrahydrofuran, Pyridin, Dimethylether, Diethylether, Dimethylsulfid, Tetramethylensulfon, Benzophenon und Isopropanol.

Anschließend kann das Polymer dann durch bekannte Techniken wie Filtration, Zugabe eines Nichtlösungsmittels zu einer Lösung des Polymeren oder Zugabe der Polymerlösung in ein Nichtlösungsmittel oder durch Verdampfen der flüchtigen Bestandteile gewonnen werden.

Zur Verbesserung der Polymereigenschaften, insbesondere der Schmelzestabilität ist es vorteilhaft, Reste des Katalysators und des Lösungsmittels durch Extraktion aus dem Polymer möglichst weitgehend zu entfernen. Zu diesem Zweck kann z.B. Wasser oder wäßrige Salzsäure eingesetzt werden; auch organische Lösungsmittel in denen der Katalysator löslich ist, z.B. Methanol, Ethanol, Aceton, Acetylaceton, N,N-Dimethylformamid und Isopropanol eignen sich zu diesem Zweck.

Als zweite Möglichkeit zur Herstellung der erfindungsgemäßen Polyarylether ist die nukleophile Substitutionsreaktion zu nennen, wie sie z.B. in der US-A 4 320 224 und bei Attwood et al. in Polymer 22, 1096 (1981) beschrieben werden.

Ganz allgemein erfolgt die Herstellung auf nukleophilem Wege durch Umsetzung eines Dihalogenmonomeren mit einem Dihydroxymonomeren.

Im vorliegenden Fall eignen sich zur Erzeugung der Einheiten der allgemeinen Formeln (I) und (II) als Dihalogenmonomere 1,4-Di-(4-fluorbenzoyl)-benzol bzw. 4,4′-Di-(4-fluorbenzoyl)-diphenyl sowie als Dihydroxymonomere 4,4′-Dihydroxybenzophenon oder 1,4-Di-(4-hydroxybenzoyl)-benzol in Mischung mit 4,4′-Dihydroxydiphenylsulfon in den entsprechenden Molverhältnissen.

Es versteht sich, daß zur Bildung von Einheiten der allgemeinen Formel (I) und (II), in denen die aromatischen Ringe substituiert sind, die entsprechend substituierten Monomeren eingesetzt werden.

Das Molverhältnis von 4,4′-Dihydroxybenzophenon bzw. 1,4-Di-(4-hydroxybenzoyl)-benzol oder Gemische daraus zu 4,4′-Dihydroxydiphenylsulfon bzw. deren substituierten Derivaten liegt entsprechend der Verteilung der Einheiten der allgemeinen Formel (I) und (II) im Bereich von 60:40 bis 97:3, bevorzugt im Bereich von 70:30 bis 95:5.

Zum Einbau von wiederkehrenden Einheiten der allgemeinen Formeln (III) und (IV) können entsprechende Anteile an weiteren Comonomeren zugesetzt werden. Hier seien nur beispielsweise Hydrochinon, 4,4′-Dihydroxydiphenyl, 1,4-Dihydroxynaphthalin, 2,6-Dihydroxynaphthalin, 2,7-Dihydroxynaphthalin, 4,4′-Dihydroxydiphenylether, 4,4′-Difluorbenzophenon, 4,4′-Dichlordiphenylsulfon, 4,4′-Di-(4-fluorbenzoyl)-diphenyl und 4,4′-Di-(4-chlorbenzolsulfonyl)-diphenyl genannt.

Die Umsetzung der Monomeren erfolgt in einem hochsiedenden inerten Lösungsmittel unter Verwendung einer Base. Eine bevorzugte Kombination Lösungsmittel/Base ist Diphenylsulfon/Kaliumcarbonat, doch können grundsätzlich auch die anderen aus der Literatur bekannten Basen oder Basengemische und

Lösungsmittel oder Lösungsmittelgemische eingesetzt werden.

Wie bereits erwähnt zeichnen sich die erfindungsgemäßen Polyaryletherketone durch hohe Glasübergangstemperaturen bei gleichzeitig relativ niedrigen Kristallschmelztemperaturen aus. Darüberhinaus ist auch ihre chemische Stabilität ausgezeichnet.

Aufgrund dieses Eigenschaftsspektrums eignen sich die erfindungsgemäßen hochtemperaturbeständigen Polyarylether insbesondere zur Herstellung von Fasern, Folien und Formkörpern, insbesondere auf dem Gebiet der Elektrotechnik und Elektronik sowie allgemein für hochtemperaturbeanspruchte Bauteile.

Beispiel 1 (Vergleich)

Herstellung von Polyetherketonetherketonketon

In einem 250 ml Dreihalskolben, der mit einem Rührer, einem Stickstoff-Einlaß und einem Innenthermometer versehen ist, wurden 30 ml Dichlormethan (frisch über Phosphorpentoxid destilliert) vorgelegt.

Der Kolben wurde mit Stickstoff gespült und während der gesamten Synthese unter Stickstoff gehalten. Der Inhalt des Kolbens wurde mit Aceton/Trockeneis auf -27° C gekühlt und wasserfreies Aluminiumchlorid (24,47 g, 183,5 mmol) über einen Pulvertrichter zugegeben. Zu der so erhaltenen Suspension wurde N,N-Dimethylformamid (DMF; 5.54 g, 75.8 mmol, frisch über Calciumhydrid destilliert in Methylenchlorid (15 ml) wegen der starken Wärmeentwicklung langsam zugegeben. Unter weiterem Kühlen wurde eine Lösung von 4,4'-Diphenoxybenzophenon (9.4094 g, 25.68 mmol), Terephthaloylchlorid (5.1365 g, 25.3 mmol), und Benzoylchlorid (0.1067 g, 0.76 mmol) in Methylenchlorid (50 ml) zugegeben.

Die zur Einwaage verwendeten Gefäße wurden mit zusätzlichen 10 ml Methylenchlorid nachgespült, um eine vollständige Überführung der Monomeren sicherzustellen.

Die gerührte Reaktionsmasse wurde im Verlauf von ca. 6 Stunden auf Raumtemperatur erwärmt. Während dieser Zeit entstand eine viskose rot-orange Suspension, die sich zu einem porösen Schaum verfestigte. Die gelartige Masse wurde mechanisch aus dem Kolben entfernt, durch Zerschneiden mit einem Messer vorzerkleinert und in einem Haushalts-Mixer zusammen mit Eiswasser zerkleinert und dekomplexiert. Die entstehende Suspension von weißen Polymerteilchen in Wasser wurde ca. 30 Minuten im Mixer gerührt und dann filtriert. Das so gewonnene Polymer wurde dreifach mit kochendem Wasser extrahiert (je 500 ml, 6 Stunden). Nach Trocknung im Vakuum (100° C, 18 Stunden) wurde ein Polymer mit einer relativen Viskosität von 1.74 (gemessen in konz. Schwefelsäure bei 25° C, 0.5 g/100 ml) erhalten.

Beispiele 2 bis 7

Die Polykondensationsreaktionen wurden unter den in Beispiel 1 beschriebenen Reaktionsbedingungen durchgeführt, mit dem Unterschied, daß anstelle von Diphenoxybenzophenon ein Gemisch aus Diphenoxybenzophenon und Diphenoxydiphenylsulfon eingesetzt wurde. Die verwendeten Mengen an Monomeren, sowie die an den gewonnenen Polymeren ermittelten Daten sind in der Tabelle zusammengefaßt.

Beispiel 8 (Vergleich)

Herstellung von Polyetherketonketon

In der in Beispiel 1 beschriebenen Apparatur wurden 30 ml Dichlormethan vorgelegt und mit Aceton-Trockeneis auf unter -10° C gekühlt. Dazu wurde Aluminiumchlorid (28.661 g, 215 mmol) zugegeben und suspendiert. Zu dieser Suspension wurde Dimethylsulfon (7.144 g, 75.9 mmol) innerhalb von 5 Minuten langsam zugegeben. Unter weiterem Kühlen auf ca. -15° C wurde Terephthalsäuredichlorid (5.137 g, 25.3 mmol) und Benzoylchlorid (0.142 g, 1.01 mmol) zugegeben. Bei ebenfalls -15° C wurde 1,4-Bis(4-phenoxybenzoyl)benzol (12.142 g, 25.81 mmol) in einer Portion zugegeben. Die zur Einwaage und Dosierung verwendeten Gefäße und Pulvertrichter wurden mit 10 ml trockenem Dichlormethan nachgespült. Das Aceton/Trockeneis-Bad wurde entfernt. Die gerührte Reaktionsmasse erwärmte sich langsam bis auf Raumtemperatur und wurde zunehmend viskoser. Nach ca. 20 Minuten war sie nicht mehr rührbar. Nach 6 Stunden bei Raumtemperatur hatte sie sich zu einem porösen, gummiartigen Schaum verfestigt. Das

Reaktionsgemisch wurde mechanisch aus dem Kolben entfernt, durch Zerschneiden mit einem Messer zerkleinert und in einem Mixer mit einem Überschuß von Wasser dekomplexiert. Die dabei entstehenden flockenartigen Polymerteilchen wurden abfiltriert und durch dreifache Extraktion mit kochendem Wasser (2 Liter, 30 Minuten) weitgehend von Katalysatorresten befreit und dann im Vakuum bei 150° C getrocknet. Das Polymer hatte eine relative Viskosität von 1.625 (gemessen in 96 %iger Schwefelsäure bei 25° C, 0.5 g/100 ml).

Beispiele 9 bis 12

Unter den in Beispiel 8 beschriebenen Bedingungen wurden Gemische von 1,4-Bis(4-phenoxybenzoyl)-benzol und Diphenoxydiphenylsulfon mit Terephthalsäuredichlorid umgesetzt. Die Verhältnisse der Monomeren zueinander und die Eigenschaften der erhaltenen Polymeren sind in der Tabelle zusammengefaßt.

Beispiel 13

Unter den in Beispiel 8 beschriebenen Bedingungen wurden miteinander umgesetzt:

4,4′-Diphenoxybenzophenon (3.764 g, 10.272 mmol), 1,4′-Bis(4-phenoxybenzoyl)benzol (4.857 g, 10.272 mmol), 4,4′-Diphenoxydiphenylsulfon (2.077 g, 5.06 mmol), Terephthalsäuredichlorid (5.137 g, 25.3 mmol), Benzoylchlorid (0.142 g, 1.01 mmol).

Die Eigenschaften des so erhaltenen Polymeren sind der Tabelle zu entnehmen.

Beispiel 14 (nucleophile Verfahrensvariante)

In einen mit Stickstoff-Einlaß, Rührer und Innenthermometer versehenen 2 l-Dreihalskolben wurden 600 g Diphenylsulfon vorgelegt und auf 180° C erwärmt. Bei dieser Temperatur wurden 1,4-Di-(p-fluorbenzoyl)-benzol (57.887 g, 0.180 mol), 4,4′-Dihydroxybenzophenon (30.779 g, 0.144 mol), 4,4′-Dihydroxydiphenylsulfon (8.99 g, 0.0360 mol), 4-Fluorbenzophenon (0.072 g, 0.36 mmol) und Kaliumcarbonat (27.305 g, 0.198 mol) zugegeben. Dann wurde 1 Stunde bei 180° C, 1 Stunde bei 240° C, 1 Stunde bei 280° C, 1 Stunde bei 305° C und 2 Stunden bei 315° C gerührt. Dabei entwichen das bei der Reaktion entstandene Wasser und Kohlendioxid. Nach Beendigung der Reaktion wurde die Reaktionsmasse noch heiß auf ein Blech ausgegossen und nach dem Erkalten mit einem Hammer zerkleinert. Man extrahierte dann 4 mal 1 Stunde mit 1 l Aceton (50° C) und 4 mal 1 Stunde mit 1 l kochendem Wasser. Das so erhaltene Polymer wurde dann 18 Stunden im Vakuum bei 100° C getrocknet.

Die Daten des erhaltenen Produkts sind ebenfalls der Tabelle zu entnehmen.

Tabelle

| Beispiel | Molverhältnis DBPB zu DPDPS | Einwaage DPBP | [g] DPDPS | R.V.[1] | Tg | Tm |
|---|---|---|---|---|---|---|
| 1 | 1.0 : 0.0 | 9.41 | 0.000 | 1.74 | 171 | 381 |
| 2 | 0.9 : 0.1 | 8.47 | 1.03 | 1.61 | 175 | 371 |
| 3 | 0.8 : 0.2 | 7.53 | 2.07 | 1.62 | 177 | 360 |
| 4 | 0.6 : 0.4 | 5.64 | 4.13 | 1.65 | 178 | 337[2] |
| 5V | 0.4 : 0.6 | 3.76 | 6.20 | 1.82 | 182 | --- |
| 6V | 0.2 : 0.8 | 1.88 | 8.27 | 1.88 | 190 | --- |
| 7V | 0.0 : 1.0 | 0.0 | 10.33 | 1.85 | 195 | --- |
| 8V[3] | 1.0 : 0.0 | 12.14 | 0.00 | 1.625 | 178 | 390 |
| 9V[3] | 0.9 : 0.1 | 10.93 | 1.04 | 1.75 | 180 | 379 |
| 10 [3] | 0.8 : 0.2 | 9.71 | 2.08 | 1.73 | 180 | 368 |
| 11 [3] | 0.7 : 0.3 | 8.50 | 3.12 | 1.705 | 181 | 361 |
| 12 [3] | 0.6 : 0.4 | 7.29 | 4.15 | 1.66 | 181 | 361[2] |
| 13 [3] | siehe Text | | | 1.78 | 179 | 365 |
| Beispiel | Molverhältnis DBPB zu DPDPS | Einwaage DHBP | [g] DHDPS | | | |
| 14 | 0.8 : 0.2 | 30.779 | 8.990 | 1.55 | 176 | 361 |

1) Gemessen bei 25° C in konzentrierter Schwefelsäure, 0.5 g/100 ml.

2) Kristallisiert beim Abkühlen mit 20 Grad/Minute aus der Schmelze nicht vollständig, sondern erst beim Tempern.

3) statt 4,4-Diphenoxybenzophenon wurde 1,4-Bis-(4-phenoxybenzoyl)benzol eingesetzt.

V = Vergleichsversuch

Verwendete Abkürzungen:

DPBP = 4,4′-Diphenoxybenzophenon DPDPS = 4,4′-Diphenoxydiphenylsulfon

DHBP = 4,4′-Dihydroxybenzophenon DHDPS = 4,4′-Dihydroxydiphenylsulfon

Tg = Glasübergangstemperatur Tm = Kristallitschmelztemperatur

R.V. = Relative Viskosität

## Ansprüche

1. Hochtemperaturbeständige Polyarylether, aufgebaut im wesentlichen aus

A) 60 bis 97 mol% wiederkehrenden Einheiten der allgemeinen Formel I

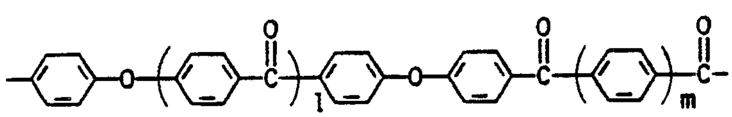

(I)

oder deren kernsubstituierten $C_1$-$C_6$-Alkyl-, $C_1$-$C_6$-Alkoxy-, Aryl-, Chlor- oder Fluorderivaten, wobei l und m den Wert 1 oder 2 haben,

B) 3 bis 40 mol% wiederkehrenden Einheiten der allgemeinen Formel II

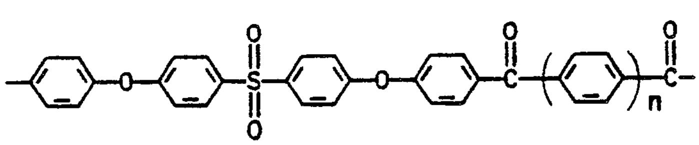

(II)

oder deren kernsubstituierten $C_1$-$C_6$-Alkyl-, $C_1$-$C_6$-Alkoxy-, Aryl-, Chlor- oder Fluorderivaten, wobei n den Wert 1 oder 2 hat,
sowie darüberhinaus

C) 0 bis 15 mol% wiederkehrenden Einheiten der allgemeinen Formeln III und/oder IV

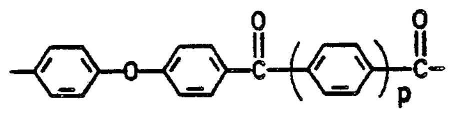

(III)

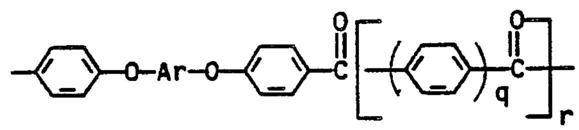

(IV)

oder deren kernsubstituierten $C_1$-$C_6$-Alkyl-, $C_1$-$C_6$-Alkoxy-, Aryl-, Chlor- oder Fluorderivaten, wobei Ar

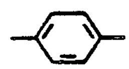

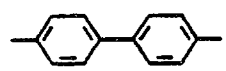

oder

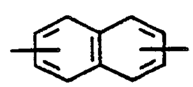

oder ein $C_1$-$C_6$-Alkyl-, $C_1$-$C_6$-Alkoxy-, Chlor- oder Fluorderivat derselben bedeutet, r den Wert 0 oder 1 und p und q und s den Wert 1 oder 2 haben.

2. Hochtemperaturbeständige Polyarylether nach Anspruch 1, gekennzeichnet durch folgende Gehalte:
A) 70 bis 95 mol%
B) 5 bis 30 mol%
C) 0 bis 10 mol%

3. Hochtemperaturbeständige Polyarylether nach Anspruch 1, aufgebaut aus
A) 60 bis 97 mol% wiederkehrenden Einheiten der Formel I und
B) 3 bis 40 mol% wiederkehrenden Einheiten der Formel II.

4. Hochtemperaturbeständige Polyarylether nach Anspruch 3, aufgebaut aus
A) 70 bis 95 mol% wiederkehrenden Einheiten der Formel I und
B) 5 bis 30 mol% wiederkehrenden Einheiten der Formel II.

5. Hochtemperaturbeständige Polyarylether nach Anspruch 4, dadurch gekennzeichnet, daß in einem Polymermolekül sowohl Gruppierungen mit l = 1 als auch solche mit l = 2 enthalten sind.

6. Polymermischung, enthaltend
20 bis 80 Gew.% eines hochtemperaturbeständigen Polyarylethers nach mindestens einem der Ansprüche 1 bis 4, und
20 bis 80 Gew.% eines Polyarylethersulfons.

7. Verwendung der hochtemperaturbeständigen Polyarylether gemäß mindestens einem der Ansprüche 1 bis 4 zur Herstellung von Fasern, Folien, Formkörpern und Hochleistungsverbundwerkstoffen.

8. Formkörper, hergestellt aus hochtemperaturbeständigen Polyarylethern gemäß mindestens einem der Ansprüche 1 bis 4.